# FASCICULE DE BREVET EUROPEEN

(11) **EP 2 845 524 B1**
(45) Date de publication et mention de la délivrance du brevet: **27.02.2019**
(21) Numéro de dépôt: 14161037.8
(22) Date de dépôt: 21.03.2014
(51) Int. Cl.: A47J 17/02, B26B 21/52

(54) **Outil à main perfectionné**
Perfektioniertes Handwerkzeug
Improved hand tool

(30) Priorité: 05.09.2013 FR 1358524
(43) Date de publication de la demande: 11.03.2015
(73) Titulaire: Opinel, 73000 Chambery (FR)
(72) Inventeur: Opinel, Denis, 73000 CHAMBERY (FR)
(74) Mandataire: Champain, Christophe

(56) Documents cités:
- WO-A1-2012/060706
- CH-A2- 706 168
- FR-A5- 2 069 202
- US-A- 449 031
- US-A- 5 355 588

## Description

La présente invention concerne un outil à main, notamment à usage ménager, en particulier de cuisine, et plus particulièrement destiné à effectuer une opération soit de tranchage en fine tranche, d'épluchage ou de pelage, de produits alimentaires tels que des fruits et légumes, ou encore de découpe de pâte à cuisiner.

L'invention sera plus particulièrement décrite au regard d'un ustensile tranchant du type éplucheur à légumes sans toutefois y être limitée. En particulier, l'invention a également trait à un outil de découpe de pâte, et de manière générale à tout outil de découpe pour cuisiner pour lequel un effort de poussée ou de traction selon une direction selon l'axe longitudinal du manche de l'outil est nécessaire à exercer lors de la découpe.

De tels instruments connus notamment sous la forme d'éplucheurs comportent d'une part un manche de direction longitudinale, et tenu par une main de l'utilisateur, et une partie active comportant au moins une lame tranchante disposée en regard d'une bande dite d'appui, parallèle à la lame, le bord tranchant de la lame étant susceptible d'être disposé, en position active, en dessous du plan formé par la lame et la bande d'appui.

Plus particulièrement, et à titre d'exemple et d'illustration, on connait notamment un tel outil à main destiné à l'épluchage ou au pelage de fruits ou légumes, et comportant, dans la partie active, un élément oblong de direction longitudinale orthogonale à celle du manche, et constitué sensiblement d'une plaque comportant une lumière centrale longitudinale, séparant la lame et la bande d'appui.

En position active, l'utilisateur saisit le manche et pose la bande d'appui sur la surface du fruit ou du légume, puis exerce une traction selon un plan tangent au légume ou fruit, au niveau de la bande d'appui, et dans la direction longitudinale du manche, en direction de l'utilisateur. L'utilisateur exerce en même temps de préférence une légère pression sur le fruit ou légume, donc dans la direction orthogonale audit plan tangent (et dans la direction longitudinale du manche).

Se faisant, la lame pénètre ou coupe la peau ou la partie à découper ou peler, et le phénomène de traction fait que la peau qui doit être enlevée est découpée par la lame, et passe au travers de la lumière séparant la barre d'appui de la lame.

Pour un ustensile de découpe de pâte, celui-ci comprend un manche et à l'une de ses extrémités une lame de découpe en forme de roulette. La découpe de la pâte se fait en tenant le manche de manière inclinée et en exerçant un effort de poussée et/ou de traction (va-et-vient ou non) dans la direction longitudinale au manche, de sorte à manoeuvrer la lame selon un mouvement de translation horizontale sur la pâte et permettre la découpe.

De tels dispositifs étant par définition coupants, présentent des risques et dangers, notamment pour les enfants ou personnes à risque. En particulier, l'utilisateur a tendance à faire glisser son index ou autre doigt vers la lame lorsqu'il reprend en main / repositionne sa main sur l'outil lors de la découpe ou lorsqu'un effort de poussée est exercé sur l'outil en direction de la lame.

Cependant, l'ajout de système de sécurité, de manière connue, conduit à augmenter l'encombrement de l'outil, et en toute hypothèse à diminuer sa maniabilité.

Par ailleurs, en fonction du fruit ou du légume ou de l'opération à effectuer, et notamment pour le découpage de fines tranches, l'effort qu'il convient d'exercer selon le plan tangent ci-dessus et selon la direction longitudinale du manche, n'est pas négligeable et les outils à main de ce type connus sont susceptibles d'amélioration à cet égard. Par exemple, la demande de brevet CH-A2-706 168 présente un éplucheur dont le manche a une forme courbe permettent à l'utilisateur d'exercer une force de traction, et comporte une excroissance circulaire en direction de la lame, de manière à permettre un doigt de l'utilisateur d'exercer une force d'appui en direction du fruit ou légume à éplucher.

Cette excroissance semble à première vue fragile, et complique la fabrication de l'outil. La forme du manche quant à elle implique un outil encombrant.

Enfin, la combinaison des deux efforts, principalement en traction, et l'autre étant en appui, suppose un dosage ad hoc, ce qui n'est pas toujours aisé avec les outils à main connus, de ce type.

La présente invention remédie à ces inconvénients et propose un outil à main en particulier de cuisine, destiné notamment à l'épluchage, le pelage ou le découpage en fines tranches de produits alimentaires, tels que fruits et légumes, selon la revendication 1. La zone d'appui située entre la partie active de l'outil et le manche est de préférence solidaire de l'extrémité du manche.

Cet outil permet ainsi de participer à la préhension de l'outil, d'aider au mouvement de traction et/ou de poussée et donc découpe en fournissant une zone d'appui et d'emplacement du doigt dans l'axe longitudinal du manche, en particulier à l'extrémité du manche, tout en protégeant le doigt par la zone de protection.

Avantageusement, la zone d'appui et la zone de protection délimitent selon l'axe du manche une partie intermédiaire formant un anneau de passage d'un doigt de l'utilisateur.

De préférence, la zone ou surface d'appui pour le doigt permet à ce dernier d'exercer une force comprenant au moins une composante selon une direction colinéaire ou parallèle à l'axe longitudinal du manche, et de direction opposée à la lame.

Selon une variante avantageuse, ladite zone d'appui pour le doigt est courbe, de concavité tournée vers la lame, et encore plus particulièrement, la zone d'appui est réalisée sous la forme d'une partie de cylindre d'axe transversal au manche.

Afin de faciliter la réalisation et la fabrication de l'outil, la zone d'appui et la zone de protection délimitent une partie intermédiaire entre la partie active et le manche, cette partie intermédiaire étant constituée d'un anneau de passage d'un doigt de l'utilisateur, la portion de l'anneau en regard de la partie active constituant la zone de protection du doigt.

La zone de protection ou l'anneau est relié à l'opposé du manche à deux branches espacées pour former une sorte de fourche (ou étrier) à l'extrémité de laquelle est fixée la lame de la partie active, les branches s'étendant dans une direction principale parallèle à l'axe du manche.

Ainsi, la partie active comporte un étrier à deux branches sur lesquels est montée la lame de découpe, de préférence l'extrémité de l'étrier opposée à la lame étant solidaire de la zone de protection.

Dans une application particulière, l'outil est utilisé en tant qu'éplucheur, et comporte un étrier à deux branches qui s'étendent dans une direction principale parallèle à l'axe du manche et en étant agencées respectivement de part et d'autre de l'axe du manche, la lame étant fixée aux extrémités libres des branches et de manière transversale au manche.

Dans le cadre d'un éplucheur, la lame est longitudinale et s'étend selon un plan orthogonal au manche. La partie active comporte également une bande d'appui qui est parallèle à ladite lame et séparée de celle-ci par un espace longitudinal oblong, la bande d'appui étant destinée à s'appuyer sur l'élément à découper.

Dans une autre application qui ne fait pas partie de l'invention revendiquée, l'outil est utilisé en tant qu'un ustensile de découpe de pâte, l'outil comporte un étrier à deux branches espacées et s'étendant selon l'axe du manche, la lame de découpe se présentant sous la forme d'une roulette qui est logée en rotation entre les deux branches. Les branches de l'étrier s'étendent selon l'axe du manche en étant espacés pour ménager l'écartement juste suffisant au logement de la roulette, l'axe de rotation de la roulette transversal aux branches étant fixé aux extrémités desdites branches.

Avantageusement, l'ensemble, zones d'appui et de protection (en particulier l'anneau formant passage pour le doigt), le manche et au moins une portion de la partie active, en particulier l'étrier, sont réalisés en une seule pièce, de préférence en métal ou à base de matériau plastique.

Dans le cas d'une fabrication en matériau plastique, la pièce est de préférence fabriquée par moulage.

Lorsque la partie support du manche est métallique, cette partie du manche est recouverte d'un fourreau en matériau plastique léger et destiné au contact et à être saisi par la main de l'utilisateur.

Le fourreau est fixé par des rivets sur la partie interne du manche.

Le fourreau peut être également réalisé en bois, en deux parties aptes à recouvrir la partie interne du manche liée à l'étrier.

Pour un éplucheur, la lame et la bande d'appui associée sont montées de façon amovible sur l'étrier, et de préférence sont montées à rotation selon un axe transversal à l'axe du manche et parallèle à la lame, selon un débattement de quelques millimètres en rotation.

Enfin, pour un éplucheur, il peut être prévu des moyens de blocage en rotation de la lame, sous forme de butées permettant un positionnement idoine de la lame à l'intérieur de l'espace délimité entre les deux branches
La figure 1 est une vue en perspective arrière de l'outil de l'invention selon un exemple d'utilisation en tant qu'éplucheur ;
La figure 2 est une vue en perspective avant du même outil ;
La figure 3 est une vue du dessus de l'outil des figures 1 et 2 ;
La figure 4 est une vue frontale du même outil ;
La figure 5 est une vue éclatée des différents composants, montrés en perspective, de l'outil des figures 1 à 4 ;
La figure 6 montre une vue de coté des figures 1 à 4 ;
Les figures 7A et 7B, montrent une vue de détail de coté de l'extrémité de l'un des étriers, vue de l'intérieur, montrant deux positions de l'organe de travail 6.
Les figures 8A et 8B sont des vues, respectivement en perspective et de côté, d'un outil de découpe pour pâte à cuisiner, ne faisant pas partie de l'invention revendiquée. On a représenté sur les figures 1 et 2, des vues en perspective de l'outil de l'invention, respectivement en perspective arrière et en perspective avant, l'outil étant utilisé en tant qu'éplucheur à titre d'exemple non limitatif.

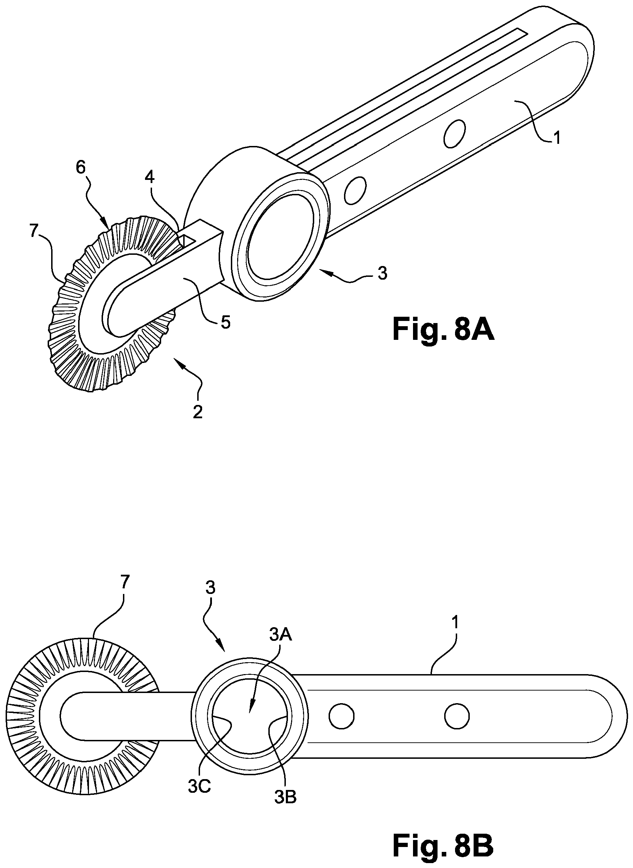

Sur les figures 8A et 8B l'outil ne faisant pas partie de l'invention revendiquée est utilisé en tant qu'outil de découpe de pâte à cuisiner, les références des différents éléments sont repris. Ces figures sont décrites ultérieurement.

L'outil comporte ainsi plusieurs parties, à savoir un manche 1 longitudinal à une extrémité duquel est associée une partie active 2 de l'outil, et un élément intermédiaire 3 entre le manche et la partie active 2, en forme d'anneau cylindrique comme expliqué ci-après.

La partie active 2 comprend elle-même un étrier comportant deux branches 4 et 5, dont une des extrémités est fixée sur l'anneau 3, et l'autre extrémité libre est associée à un organe de travail 6, destiné à découper en fines tranches, éplucher ou peler notamment des produits alimentaires tels que des fruits ou légumes.

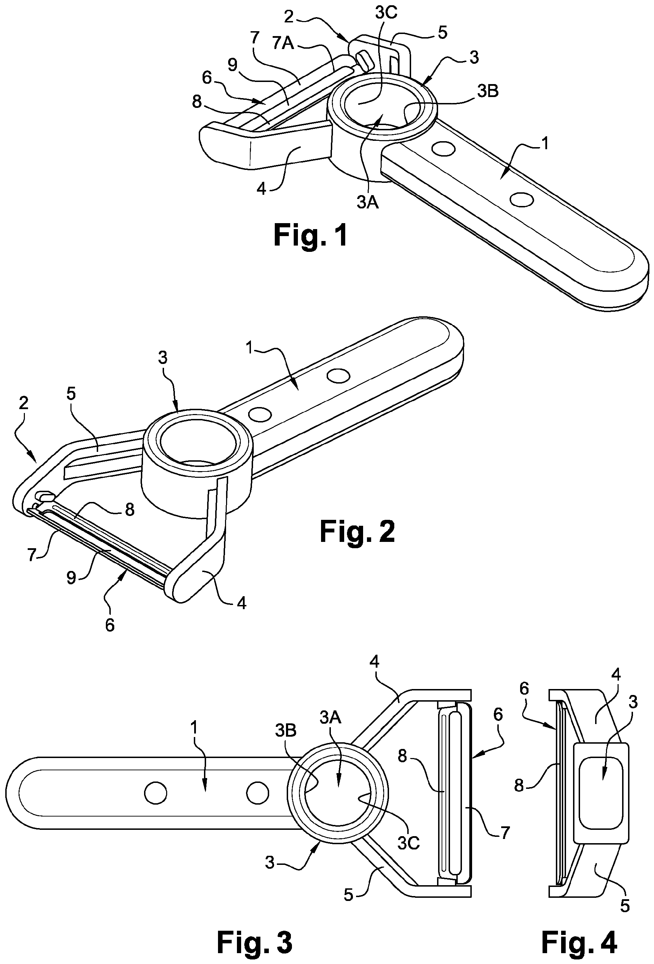

En regard des figures 1 et 2, l'organe 6, appelé ci-après l'organe de travail, est constitué de manière connue d'une lame 7 dont le tranchant 7A est d'axe transversal au manche et relie les deux extrémités de l'étrier. La partie tranchante 7A de la lame 7 est tournée vers le manche.

L'organe de travail 6 comporte en outre, de façon connue et selon un mode préféré, une bande 8 dite d'appui, parallèle à la lame coupante 7.

Plus particulièrement, selon une forme avantageuse, l'organe 6 de travail est constitué d'une plaque unique oblongue, comportant un ajourage ou lumière centrale oblongue 9, de part et d'autre de laquelle sont disposées la lame 7 et la bande 8.

Les plans respectifs de la lame 7 et de la bande d'appui 8 sont décalés angulairement de façon que le bord tranchant 7A de la lame soit disposé en dessous de la bande d'appui 8 par rapport à un plan passant par la bande d'appui 8 et l'extrémité distale du manche.

On retrouve sur les figures 3 et 4, la plupart des éléments et organes des figures 1 et 2 qui portent les mêmes références.

L'organe de travail 6, 7 et 8 est en acier inoxydable de préférence.

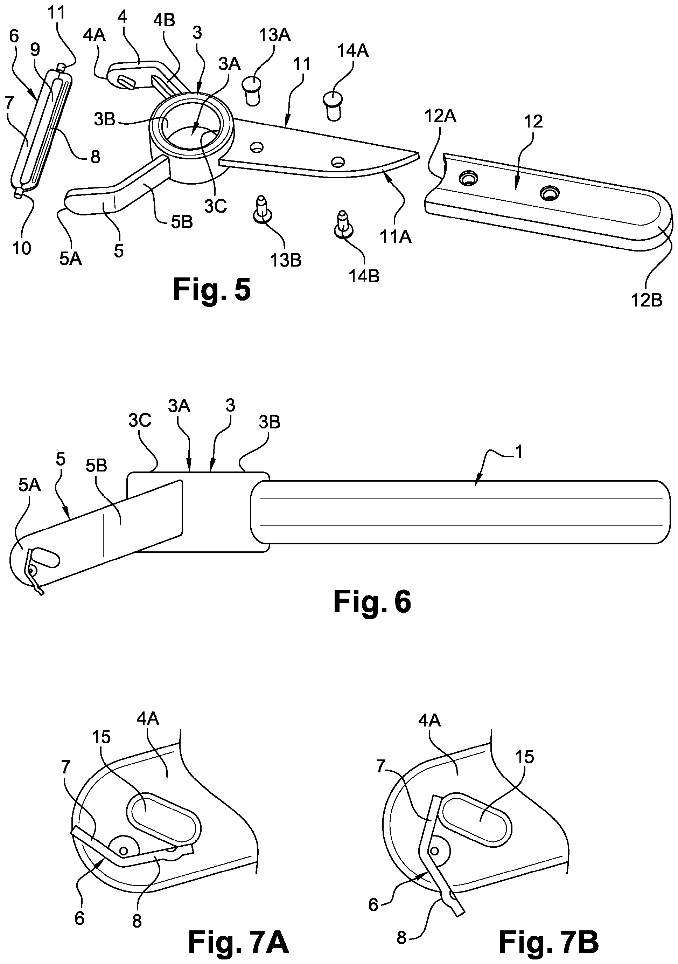

La figure 5 montre en vue éclatée en perspective l'outil à main des figures 1 à 4, et notamment ses différents composants.

Ainsi, l'outil, selon une forme préférée de réalisation, comporte :
- L'organe de travail 6 décrit ci-dessus comportant la lame 7 et la bande d'appui 8, et également deux ergots d'extrémité 10 et 11.
- L'étrier formé par les branches 4 et 5 qui sont espacées et s'étendent dans une direction principale parallèle à l'axe longitudinal du manche et de part et d'autre dudit manche.
- La partie centrale intermédiaire 3 en forme d'anneau cylindrique.
- Un plat ou lamelle rigide longitudinale 11, fixée ou solidaire de l'anneau intermédiaire 3, du coté opposé aux branches de l'étrier 4, 5.
- Un manchon 12 apte à recouvrir lame 11, et formant un fourreau, l'ensemble du plat et du fourreau formant le manche 1 de l'outil.

Ladite lamelle 11 forme l'âme du manche 1 et comporte, selon la forme de réalisation montrée, une extrémité libre 11A en arc de cercle.

Chaque branche 4, 5 de l'étrier est coudée et comporte :
- une première partie 4B, 5B fixée selon un angle formant un V entre elles, sur l'anneau cylindrique 3, et
- une seconde partie 4A d'axe parallèle à l'axe longitudinal du manche.

Les parties d'extrémité 4A et 5B de chaque branche 4, 5 sont pourvues d'un trou ou lumière susceptible d'être associé aux ergots 10 et 11 de l'organe de travail 6, de façon à permettre la fixation de ce dernier, tout en permettant à ce dernier une faible rotation de l'ordre de quelques degrés à 15°maximum en rotation par rapport aux branches 4 et 5.

L'extrémité proximale 12A du fourreau 12 est apte à venir buter contre la paroi extérieure de l'anneau cylindrique 3 et comprend ainsi une forme complémentaire. L'autre extrémité distale 12B du fourreau est arrondie pour des raisons de sécurité. Le fourreau 12 peut être réalisé en plastique ou en bois.

Le manchon 12 est fixé et solidarisé sur lame 11 par l'intermédiaire de deux rivets 13A, 13B, et 14A, 14B.

Sur la figure 6, on retrouve les éléments et organes montrés sur les figures 4 et 5, et qui portent les mêmes références.

La figure 6 permet de montrer que les étriers 4 et 5, en l'occurrence l'étrier 5 visible, est disposé de manière inclinée par rapport au plan défini par le manche 1 et la pièce intermédiaire annulaire 3, ce qui permet de disposer, en position active d'utilisation de l'outil, la lame 7 en dessous du manche.

Les figures 7A et 7B montrent une vue de coté, de l'intérieur, de l'extrémité 4A de l'étrier 4, montrant l'organe de travail 6 monté à rotation sur ladite extrémité 4A et mobile en rotation entre les deux positions montrées sur les figures 7A et 7B respectivement.

Le bord d'extrémité distal de la lame 7, opposé au coté tranchant 7A est donc à la lumière médiane 9, est susceptible de venir en butée contre un ergot 15 faisant saillie vers l'intérieur, prévu sur la branche 4A, 5A. Les ergots 15 des branches de support de la lame permettent de maîtriser la rotation de la lame et son angle d'attaque à l'utilisation.

Lors de l'utilisation de l'outil de l'invention, l'utilisateur saisit avec une main le manche 1, et fait passer un de ses doigts, de préférence l'index, dans le trou 3A de l'anneau intermédiaire cylindrique 3.

L'utilisateur ensuite pose l'outil sur le fruit à traiter (non représenté), le manche 1 et l'anneau 3 étant dans un même plan sensiblement horizontal.

L'outil est en position d'appui sur le fruit ou le légume par l'intermédiaire de la bande d'appui 8, tandis que la lame 7 a commencé à pénétrer dans la peau la partie superficielle du fruit ou du légume.

En maintenant le fruit par l'autre main ou par tout autre moyen, l'utilisateur alors exerce un effort de traction dans le plan du manche et dans la direction de celui-ci, opposée à la lame, c'est-à-dire en tirant vers l'utilisateur, ce qui provoque la pénétration de la partie active 7A dans le fruit et soulève ainsi la partie superficielle de la peau ou de la partie à enlever du fruit, ou une fine tranche de ce dernier, qui passe au travers de la lumière oblongue centrale 9 pour constituer soit l'épluchure, ou la fine tranche à réaliser.

Ce faisant, l'utilisateur exerce également un effort additionnel, de moindre importance en intensité, dans une direction orthogonale au plan tangent de contact du fruit avec la bande d'appui 8, ou encore selon l'axe longitudinal du manche 1.

La direction de cet effort additionnel peut être également définie comme étant orthogonale au plan défini par le manche 1 et l'anneau intermédiaire 3.

L'effort appliqué par l'utilisateur, dans le sens de la traction, dans le plan du manche, est fortement aidé par, voire provient principalement de, l'appui du doigt passant au travers du trou 3A de la pièce 3, dans la partie 3B de ce dernier proche du manche ; cette partie d'appui est en arc de cercle de cylindre à concavité tournée vers l'organe de travail 6.

Le fait que la partie centrale 3 présente une forme fermée (cylindrique) permet de protéger le doigt.

En regard des figures 8A et 8B, l'outil, ne faisant pas partie de l'invention revendiquée, est destiné à un autre type de découpe, la découpe de pâte à cuisiner, seule la partie active 2 diffère de celle de l'éplucheur.

L'outil de découpe de pâte comporte conformément à l'invention un manche longitudinal 1 et une partie 3B d'appui pour le doigt proche du manche et sensiblement transversale à celui-ci, cette partie se prolongeant selon une ligne de préférence fermée en forme de pièce annulaire 3 creuse pour avantageusement permettre le passage du doigt au travers du trou 3A, et sa protection par la zone de protection 3C.

L'organe de travail 6 de cet outil de découpe de pâte se présente sous la forme d'une roulette dont la lame 7 est ici avantageusement dentelée. L'organe de travail 6 est monté sur un étrier aux deux branches 4 et 5, la forme et l'agencement desdites branches différant de ceux de l'éplucheur.

De manière connue, les branches 4 et 5 sont oblongues et s'étendent dans l'axe longitudinal du manche. Les branches sont espacées pour accueillir la roulette 6 montée en rotation entre lesdites branches et fixée aux extrémités de ces dernières.

## Revendications

1. Outil à main de cuisine comportant un manche (1) longitudinal, une partie active de découpe (2) comprenant une lame de découpe (7), disposée en regard d'une bande dite d'appui (8), parallèle à la lame, la lame (7) étant disposée transversalement au manche (1), l'outil comportant une zone d'appui (3B) d'au moins un doigt de l'utilisateur tenant le manche, cette zone d'appui s'étendant sensiblement transversalement au manche, ledit outil comportant en outre une zone de protection (3C) du doigt, la zone d'appui (3B) et la zone de protection (3C) délimitant une partie intermédiaire (3) entre la partie active (2) et le manche (1), **caractérisé en ce que** cette partie intermédiaire (3) est constituée d'un anneau de passage d'un doigt de l'utilisateur, la portion de l'anneau en regard de la partie active constituant la zone de protection du doigt.

2. Outil selon la revendication 1, **caractérisé en ce que** la zone d'appui (3B) permet au doigt d'exercer une force comprenant au moins une composante selon une direction colinéaire ou parallèle à l'axe longitudinal du manche, et de direction opposée à la lame.

3. Outil selon l'une quelconque des revendications précédentes, **caractérisé en ce que** la zone d'appui (3B) pour le doigt est courbe, de concavité tournée vers la lame (7).

4. Outil selon l'une quelconque des revendications précédentes, **caractérisé en ce que** la zone d'appui (3B) est réalisée sous la forme d'une partie de cylindre d'axe transversal au manche.

5. Outil selon l'une quelconque des revendications précédentes, **caractérisé en ce que** la partie active (2) comporte un étrier à deux branches (4, 5) sur lesquels est montée la lame de découpe (7), de préférence l'extrémité de l'étrier opposée à la lame étant solidaire de la zone de protection (3C).

6. Outil selon l'une quelconque des revendications précédentes, **caractérisé en ce qu'**il forme un éplucheur et comporte un étrier à deux branches (4, 5) qui s'étendent dans une direction principale parallèle à l'axe du manche et en étant agencées respectivement de part et d'autre de l'axe du manche, la lame (7) étant fixée aux extrémités libres des branches et de manière transversale au manche (1).

7. Outil selon l'une quelconque des revendications précédentes, **caractérisé en ce que** la zones d'appui (3B), la zone de protection (3C), le manche (1) et au moins une portion de la partie active (2) sont réalisés en une seule pièce, de préférence en métal ou à base de matériau plastique.

## Patentansprüche

1. Handwerkzeug für die Küche, aufweisend einen länglichen Griff (1), einen aktiven Schneideteil (2), umfassend eine Schneideklinge (7), die gegenüber einem sogenannten zu der Klinge parallelen Stützstreifen (8) angeordnet ist, wobei die Klinge (7) transversal zum Griff (1) angeordnet ist, wobei das Werkzeug eine Stützzone (3B) für mindestens einen Finger des Benutzers, der den Griff hält, aufweist, wobei sich diese Stützzone im Wesentlichen transversal zum Griff erstreckt, wobei das Werkzeug ferner eine Schutzzone (3C) des Fingers aufweist, wobei die Stützzone (3B) und die Schutzzone (3C) einen Übergangsteil (3) zwischen dem aktiven Teil (2) und dem Griff (1) begrenzen, **dadurch gekennzeichnet, dass** dieser Übergangsteil (3) von einem Durchgangsring für einen Finger des Benutzers gebildet ist, wobei der Abschnitt des Rings gegenüber dem aktiven Teil die Schutzzone für den Finger bildet.

2. Werkzeug nach Anspruch 1, **dadurch gekennzeichnet, dass** die Stützzone (3B) dem Finger erlaubt, eine Kraft auszuüben, die mindestens eine Komponente gemäß einer zur Längsachse des Griffs kollinearen oder parallelen Richtung und einer zur Klinge entgegengesetzten Richtung umfasst.

3. Werkzeug nach einem der vorangehenden Ansprüche, **dadurch gekennzeichnet, dass** die Stützzone (3B) für den Finger gekrümmt mit einer zur Klinge (7) zeigenden Konkavität ist.

4. Werkzeug nach einem der vorangehenden Ansprüche, **dadurch gekennzeichnet, dass** die Stützzone (3B) in Form eines Zylinderteils mit zum Griff transversaler Achse ausgeführt ist.

5. Werkzeug nach einem der vorangehenden Ansprüche, **dadurch gekennzeichnet, dass** der aktive Teil (2) einen Bügel mit zwei Schenkeln (4, 5) aufweist, auf denen die Schneideklinge (7) angebracht ist, wobei vorzugsweise das Ende des Bügels, das der Klinge gegenüberliegt, mit der Schutzzone (3C) fest verbunden ist.

6. Werkzeug nach einem der vorangehenden Ansprüche, **dadurch gekennzeichnet, dass** es einen Schäler bildet und einen Bügel mit zwei Schenkeln (4, 5) aufweist, die sich in einer zur Achse des Griffs parallelen Hauptrichtung erstrecken und dabei jeweils beiderseits der Achse des Griffs ausgebildet sind, wobei die Klinge (7) an den freien Enden der Schenkel und transversal zum Griff (1) befestigt sind.

7. Werkzeug nach einem der vorangehenden Ansprüche, **dadurch gekennzeichnet, dass** die Stützzone (3B), die Schutzzone (3C), der Griff (1) und mindestens ein Abschnitt des aktiven Teils (2) einstückig, vorzugsweise aus Metall oder auf der Basis von Kunststoff, hergestellt sind.

## Claims

1. A kitchen hand tool including a longitudinal handle (1), an active cutting portion (2) comprising a cutting blade (7) disposed opposite a strip called bearing strip (8), parallel to the blade, the blade (7) being disposed transversely to the handle (1), the tool including a bearing area (3B) of at least one finger of the user holding the handle, this bearing area extending substantially transversely at the handle, said tool further including a finger protection area (3C), the bearing area (3B) and the protection area (3C) delimiting an intermediate portion (3) between the active portion (2) and the handle (1), **characterized in that** this intermediate portion (3) consists of a ring for passing a finger of the user, the portion of the ring facing the active portion constituting the finger protection area.

2. The tool according to claim 1, **characterized in that** the bearing area (3B) enables the finger to exert a force comprising at least one component in a direction collinear or parallel to the longitudinal axis of the handle, and in a direction opposite to the blade.

3. The tool according to any one of the preceding claims, **characterized in that** the bearing area (3B) for the finger is curved, with a concavity turned toward the blade (7).

4. The tool according to any one of the preceding claims, **characterized in that** the bearing area (3B) is made in the form of a cylinder portion with an axis transverse to the handle.

5. The tool according to any one of the preceding claims, **characterized in that** the active portion (2) includes a stirrup with two branches (4, 5) on which is mounted the cutting blade (7), preferably the end of the stirrup opposite to the blade being secured to the protection area (3C).

6. The tool according to any one of the preceding claims, **characterized in that** it forms a peeler and includes a stirrup with two branches (4, 5) which extend in a main direction parallel to the axis of the handle and being arranged respectively on either side of the axis of the handle, the blade (7) being fastened to the free ends of the branches and transversely to the handle (1).

7. The tool according to any one of the preceding claims, **characterized in that** the bearing area (3B), the protection area (3C), the handle (1) and at least a portion of the active portion (2) are formed in one piece, preferably made of metal or based on plastic material.
